# FASCICULE DE BREVET EUROPEEN

(11) **EP 2 070 733 B1**
(45) Date de publication et mention de la délivrance du brevet: **02.05.2012**
(21) Numéro de dépôt: 08020716.0
(22) Date de dépôt: 28.11.2008
(51) Int. Cl.: B60C 23/04

(54) **Procédé de localisation de la position longitudinale de roues d'un véhicule**
Verfahren zur Lokalisierung der Längsstellung von Fahrzeugrädern
Method for locating the longitudinal position of the wheels of a vehicle

(30) Priorité: 14.12.2007 FR 0708705
(43) Date de publication de la demande: 17.06.2009
(73) Titulaire: Continental Automotive France, 31100 Toulouse (FR)
(72) Inventeur: Costes, Olivier, 31170 Tournefeuille (FR)

(56) Documents cités:
- WO-A-02/34553
- US-A1- 2006 001 533
- US-B1- 6 204 758

## Description

L'invention concerne un procédé de localisation de la position longitudinale, soit sur le train avant, soit sur le train arrière d'un véhicule à moteur, de roues équipées d'un boîtier électronique adapté pour émettre, à destination d'une unité centrale montée sur le véhicule, des signaux représentatifs de paramètres de fonctionnement de chaque roue comportant, en outre, un code d'identification de cette dernière.

De plus en plus de véhicules automobiles possèdent, à des fins de sécurité, des systèmes de surveillance comportant des capteurs montés sur chacune des roues du véhicule, dédiés à la mesure de paramètres, tels que pression ou température des pneumatiques équipant ces roues, et destinés à informer le conducteur de toute variation anormale du paramètre mesuré.

Ces systèmes de surveillance sont classiquement dotés:
- d'un boîtier électronique monté sur chacune des roues du véhicule, intégrant, outre les capteurs précités, un microprocesseur et un émetteur radiofréquence (ou émetteur RF), et
- d'une unité centrale, montée sur le véhicule, pour réception des signaux émis par les émetteurs. Cette unité centrale comporte un calculateur intégrant un récepteur radiofréquence (ou récepteur RF) connecté à une antenne.

Un des problèmes que nécessitent de résoudre de tels systèmes de surveillance réside dans l'obligation de devoir associer à chaque signal reçu par le récepteur de l'unité centrale, une information concernant la localisation du boîtier électronique et donc de la roue à l'origine de ce signal, cette obligation perdurant pendant la durée de vie du véhicule, c'est à dire devant être respectée même après des changements de roues ou plus simplement des inversions de la position de ces roues. Le document US-B1-6204758 décrit un tel système associé à un procédé de localisation de position longitudinale d'une roue en accord avec le préambule de la revendication 1.

A l'heure actuelle, une première méthode de localisation consiste à intégrer un accéléromètre dans chaque boîtier électronique, et à mettre en oeuvre une technique de localisation basée sur des méthodes statistiques consistant à comparer les accélérations des différentes roues pour obtenir une information sur la position respective de chacune des dites roues.

Cette méthode de localisation s'avère toutefois peu performante car elle requiert un temps de roulage conséquent pour réaliser une discrimination entre les différentes roues.

Une deuxième méthode de localisation consiste à utiliser trois antennes basse fréquence positionnées chacune à proximité d'une des roues du véhicule, et à effectuer une procédure de localisation consistant à exciter successivement chacune de ces trois antennes par l'émission d'un champ magnétique basse fréquence.

Selon cette procédure, le boîtier électronique monté sur la roue située à proximité de l'antenne excitée émet, en réponse et à destination de l'unité centrale, un signal basse fréquence comportant un code d'identification du dit boîtier, de sorte que l'excitation successive des trois antennes conduit à la localisation des trois boîtiers électroniques montés sur les roues jouxtant ces antennes, et par déduction, à la localisation du quatrième boîtier.

Le principal avantage d'un tel procédé réside dans le fait que la procédure de localisation est très rapide et conduit à une localisation quasi-instantanée après le démarrage du véhicule.

Par contre, cette solution s'avère très coûteuse car elle impose d'équiper le véhicule de trois antennes avec toutes les sujétions afférentes : câbles de connexion, amplificateurs de commande...

La présente invention vise, quant à elle, une troisième méthode dédiée à la localisation de la position longitudinale (train avant ou train arrière) des roues d'un véhicule, et a pour principal objectif de fournir un procédé de localisation très performant en termes de réactivité et de fiabilité, dont la mise en ceuvre génère un coût de revient global notablement inférieur à celui généré, pour un même résultat final, par la mise en oeuvre des deux méthodes actuelles discutées ci-dessus.

A cet effet, l'invention vise un procédé de localisation de la position longitudinale, soit sur le train avant, soit sur le train arrière d'un véhicule à moteur, de roues équipées d'un boîtier électronique adapté pour émettre, à destination d'une unité centrale montée sur le véhicule, des signaux représentatifs de paramètres de fonctionnement de chaque roue comportant, en outre, un code d'identification de cette dernière. Selon l'invention, ce procédé de localisation consiste à intégrer, dans chaque boîtier électronique, des moyens de mesure des vibrations sollicitant la roue correspondante et résultant de la rotation du moteur, et :
- dans une phase préliminaire de caractérisation de chaque véhicule type, à réaliser, moteur tournant et pour au moins une vitesse de rotation du dit moteur, une analyse spectrale des signaux représentatifs des vibrations en fonction de la fréquence, délivrés par les moyens de mesure respectifs d'une roue montée sur le train avant et d'une roue montée sur le train arrière, de façon à établir un critère de différenciation des dits signaux consistant en un décalage fréquentiel entre ces derniers,
- et à instaurer une procédure de localisation de la position longitudinale des roues consistant à procéder, moteur tournant, à une analyse des signaux représentatifs des variations d'amplitude des vibrations en fonction de la fréquence, délivrés, à au moins un même instant t, par les différents moyens de mesure, et à déduire du décalage fréquentiel entre les dits signaux, une information sur la position longitudinale de chaque roue.

Il est à noter que selon l'invention, on entend définir de façon générale, par moyens de mesure, tous moyens, tels que par exemple capteurs de vibrations, capteurs acoustiques, conçus pour fournir des signaux représentatifs des spectres d'amplitude en fonction de la fréquence, des vibrations issues de la rotation du moteur du véhicule auxquelles sont soumis les dits moyens de mesure.

L'invention a donc consisté :
- à mettre en oeuvre une technique de localisation basée sur la mesure, au niveau des boîtiers électroniques, des vibrations générées par la rotation du moteur d'un véhicule,
- à mettre en lumière que les signaux délivrés par des moyens de mesure positionnés sur un même train, avant ou arrière, ne présentent sensiblement pas de décalage différentiel,
- et à mettre en lumière que les signaux délivrés par des moyens de mesure positionnés sur des trains différents présentent un décalage différentiel caractéristique apte à permettre de déterminer la localisation longitudinale des roues.

Une telle technique s'avère très performante en termes de réactivité car elle conduit à une localisation de la position longitudinale des roues quasi immédiate suite à la mise en route du moteur.

Selon un mode de mise en oeuvre avantageux, on utilise des moyens de mesure consistant en des capteurs de vibration aptes à délivrer des signaux représentatifs des vibrations "solidiennes" sollicitant les roues.

De tels capteurs de vibrations consistent en des capteurs d'une technologie simple et éprouvée et conduisent, pour un même résultat final, à un coût global d'installation (fourniture, implantation et adaptation logicielle) inférieur à celui d'une installation comportant des accéléromètres.

Un autre avantage de ces capteurs de vibrations réside dans leur robustesse particulièrement adaptée aux conditions sévères d'environnement des boîtiers électroniques.

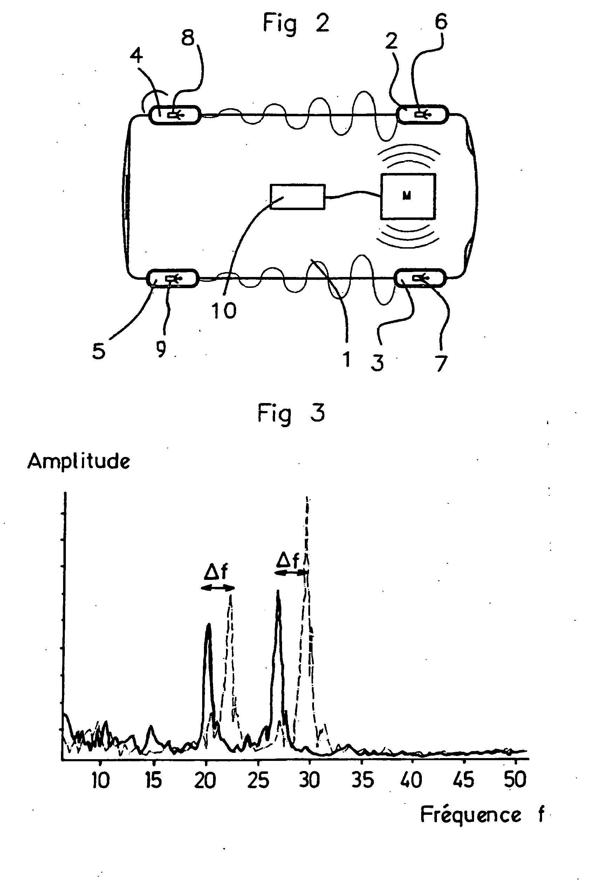

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :

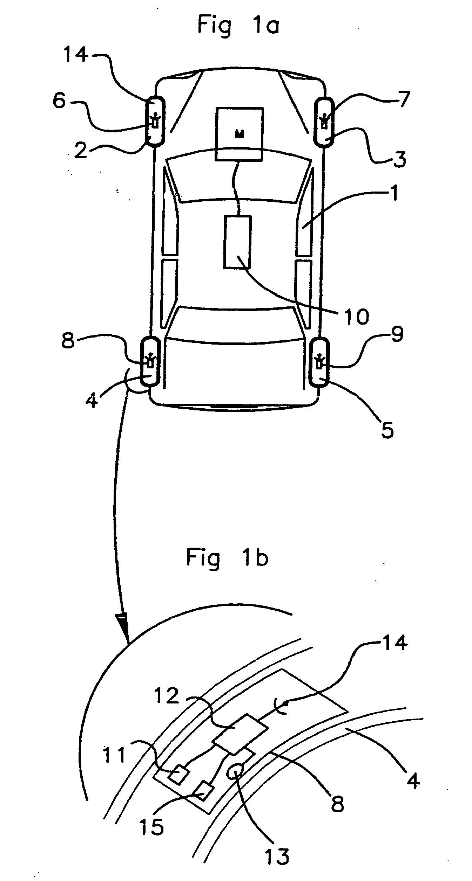

- la figure 1a est une vue de dessus schématique d'un véhicule doté d'un système de surveillance associé à un dispositif selon l'invention de localisation de la position longitudinale des roues du dit véhicule,
- **la** **figure 1b** est une vue de détail schématique en perspective représentant une portion de roue de ce véhicule ainsi que le boîtier électronique équipant cette dernière,
- **la** **figure 2** est une vue de dessus schématique d'un véhicule sur laquelle sont schématisées les ondes "solidiennes" résultant de la rotation du moteur,
- **et la** **figure 3** est un graphique comparatif de deux signaux délivrés par des moyens de mesure implantés respectivement sur une roue avant (trait pointillé) et sur une roue arrière (trait épais).

Le dispositif de localisation selon l'invention représenté à titre d'exemple aux figures 1a et 1b est destiné à la localisation de la position longitudinale (roue avant ou roue arrière) de roues d'un véhicule.

Ce dispositif de localisation est plus spécifiquement destiné à être installé sur des véhicules dotés d'un système de surveillance tel que celui, représenté à la figure 1 a, équipant un véhicule 1 à moteur M muni de quatre roues chaussées classiquement d'un pneumatique : deux roues avant 2, 3 et deux roues arrière 4, 5.

De tels systèmes de surveillance comportent classiquement, en premier lieu, associé à chaque roue 2-5, un boîtier électronique 6-9, par exemple solidarisé sur la jante de la dite roue de façon à être positionné à l'intérieur de l'enveloppe du pneumatique.

Chacun de ces boîtiers électroniques 6-9 intègre, par exemple (figure 1 b), des capteurs 11 dédiés à la mesure de paramètres, tels que pression et/ou température du pneumatique, connectés à une unité de calcul 12 à microprocesseur alimentée électriquement au moyen d'une pile-bouton 13, et reliée à un émetteur RF connecté à une antenne haute fréquence 14.

Le système de surveillance comprend, également, un calculateur centralisé ou unité centrale 10 (figure 1) situé dans le véhicule 1, comportant un microprocesseur et intégrant un récepteur RF apte à recevoir les signaux émis par chacun des quatre boîtiers électroniques 6-9.

De façon usuelle, un tel système de surveillance et notamment son unité centrale 10 sont conçus de façon à informer le conducteur de toute variation anormale des paramètres mesurés par les capteurs 11 associés aux roues 2-5.

Associé à ce système de surveillance et faisant partie intégrante de ce dernier, le dispositif de localisation selon l'invention a pour fonction de permettre d'associer à chaque signal reçu par l'unité centrale 10, une information concernant la position longitudinale de la roue 2-5 équipée du boîtier électronique 6-9 à l'origine de ce signal.

A cet effet, ce dispositif de localisation comporte des moyens de mesure 15 (figure 1b), tels qu'un capteur de vibrations ou un capteur acoustique, intégrés dans chaque boîtier électronique 6-9 et adaptés pour fournir un signal représentatif des variations de l'amplitude en fonction de la fréquence, des vibrations auxquelles sont soumis les dits moyens de mesure lors du fonctionnement du moteur M.

A titre d'exemple, les capteurs utilisés peuvent consister en des capteurs de vibrations 15 conçus pour mesurer les ondes "solidiennes", c'est-à-dire, tel que représenté à la figure 2, les vibrations se propageant par voie solide, transmises, à partir de leur source (moteur M), à travers le canal solide (carrosserie), jusqu'à leur destination (roues 2-5).

De tels moyens de mesure ou capteurs 15 positionnés conformément à l'invention présentent les particularités suivantes, déterminantes selon le principe de l'invention :
- les signaux représentatifs des spectres d'amplitude délivrés par des capteurs 15 positionnés sur un même train, avant ou arrière, ne présentent sensiblement pas de décalage différentiel entre eux,
- les signaux représentatifs des spectres d'amplitude délivrés par des capteurs 15 positionnés sur des trains différents présentent un décalage différentiel caractéristique apte à permettre de déterminer la localisation longitudinale des roues.

A titre illustratif, la figure 3 représente deux signaux délivrés par deux capteurs implantés respectivement sur une roue avant 2, 3 (trait plein) et sur une roue arrière 4, 5 (trait pointillé), et met en lumière le décalage fréquentiel Δf caractéristique existant entre ces deux signaux, en l'exemple sensiblement égal à 3 Hertz.

Ces particularités permettent de mettre en oeuvre un procédé de localisation consistant, selon l'invention, pour chaque véhicule type 1 :
- dans une phase préliminaire de caractérisation, à réaliser, moteur M tournant et pour au moins une vitesse de rotation du dit moteur, une analyse spectrale des signaux représentatifs des vibrations en fonction de la fréquence délivrés par les capteurs respectifs 15 d'une roue 2, 3 montée sur le train avant et d'une roue 4, 5 montée sur le train arrière, de façon à définir le décalage fréquentiel entre les dits signaux,
- et à instaurer une procédure de localisation de la position longitudinale des roues 2-5 consistant à procéder à une analyse des signaux représentatifs des variations d'amplitude des vibrations en fonction de la fréquence lorsque le moteur tourne (que le véhicule soit immobile ou en déplacement), délivrés, à au moins un même instant t, par les différents capteurs 15, et à déduire du décalage fréquentiel entre les dits signaux, une information sur la position longitudinale de chaque roue 2-5.

Le procédé de localisation selon l'invention décrit ci-dessus permet donc, moyennant l'installation des moyens de mesure tels que capteur de vibrations ou capteur acoustique dans chaque boîtier électronique embarqué sur une roue de véhicule, de localiser très rapidement et de façon fiable, la position longitudinale de la dite roue.

## Revendications

1. Procédé de localisation de la position longitudinale, soit sur le train avant, soit sur le train arrière d'un véhicule (1) à moteur (M), de roues (2-5) équipées d'un boîtier électronique (6-9) adapté pour émettre, à destination d'une unité centrale (10) montée sur le véhicule (1), des signaux représentatifs de paramètres de fonctionnement de chaque roue comportant, en outre, un code d'identification de cette dernière, le dit procédé de localisation étant **caractérisé en ce qu'**il consiste à intégrer, dans chaque boîtier électronique (6-9), des moyens de mesure (15) des vibrations sollicitant la roue correspondante et résultant de la rotation du moteur (M), et :
• dans une phase préliminaire de caractérisation de chaque véhicule type, à réaliser, moteur (M) tournant et pour au moins une vitesse de rotation du dit moteur, une analyse spectrale des signaux représentatifs des vibrations en fonction de la fréquence délivrés par les moyens de mesure (15) respectifs d'une roue (2, 3) montée sur le train avant et d'une roue (4, 5) montée sur le train arrière, de façon à établir un critère de différenciation des dits signaux consistant en un décalage fréquentiel entre ces derniers,
• et à instaurer une procédure de localisation de la position longitudinale des roues (2-5) consistant à procéder, moteur tournant, à une analyse des signaux représentatifs des variations d'amplitude des vibrations en fonction de la fréquence, délivrés, à au moins un même instant t, par les différents moyens de mesure (15), et à déduire du décalage fréquentiel entre les dits signaux, une information sur la position longitudinale de chaque roue (2-5).

2. Procédé de localisation selon la revendication 1 **caractérisé en ce** due l'on utilise des moyens de mesure consistant en des capteurs de vibration (15) aptes à délivrer des signaux représentatifs des vibrations "solidiennes" sollicitant les roues (2-5).

## Claims

1. Method of locating the longitudinal position, either on the front train or on the rear train of a vehicle (1) with a motor (M), of wheels (2-5) fitted with an electronic module (6-9) adapted to send, to a central processing unit (10) mounted on the vehicle (1), signals representative of operating parameters of each wheel also comprising an identification code of the latter, said locating method being **characterized in that** it consists in incorporating in each electronic module (6-9), means (15) of measuring vibrations stressing the corresponding wheel and resulting from the rotation of the engine (M), and:
• in a preliminary phase of characterization of each standard vehicle, in performing, with the engine (M) running and for at least one speed of rotation of said engine, a spectral analysis of the signals representative of the vibrations according to the frequency delivered by the respective measurement means (15) of a wheel (2, 3) mounted on the front train and of a wheel (4, 5) mounted on the rear train, so as to establish a criterion for differentiating said signals consisting in a frequency offset between the latter,
• and in setting up a procedure for locating the longitudinal position of the wheels (2-5) consisting in carrying out, with the engine running, an analysis of the signals representative of the amplitude variations of the vibrations according to the frequency, delivered, at at least one same instant t, by the different measurement means (15), and in deducing from the frequency offset between said signals, an indication concerning the longitudinal position of each wheel (2-5).

2. Locating method according to Claim 1, **characterized in that** measurement means are used that consist of vibration sensors (15) able to deliver signals representative of the "solid-borne" vibrations stressing the wheels (2-5).

## Patentansprüche

1. Verfahren zur Lokalisierung der Längsstellung, nämlich entweder am vorderen Fahrgestell oder am hinteren Fahrgestell eines Fahrzeugs (1) mit einem Motor (M), von Rädern (2-5) die mit einem elektronischen Schaltkasten (6-9) ausgerüstet sind, der dazu angepasst ist, zu einer auf dem Fahrzeug (1) angebrachten zentralen Einheit (10) Signale auszusenden, die für Betriebs-Kenngrößen von jedem Rad repräsentativ sind und außerdem einen Identifikationscode für dieses letztere umfassen, wobei das Verfahren zur Lokalisierung **dadurch gekennzeichnet ist, dass** es daraus besteht, in jeden elektronischen Schaltkasten (6-9) Messmittel (15) für die Schwingungen zu integrieren, die das betreffende Rad beanspruchen und sich aus der Rotation des Motors (M) ergeben, und:
• in einer vorhergehenden Phase der Typ-Charakterisierung jedes Fahrzeugs bei laufendem Motor (M) und für mindestens eine Umdrehungsgeschwindigkeit des Motors eine spektrale Analyse in Abhängigkeit von der Frequenz der für die Schwingungen repräsentativen Signale durchzuführen, die von den jeweiligen Messmitteln (15) eines an dem vorderen Fahrgestell angebrachten Rades (2, 3) und eines auf dem hinteren Fahrgestell angebrachten Rades (4, 5) abgegeben werden, um ein Differenzierungskriterium der Signale zu erstellen, das aus einem Frequenzversatz zwischen diesen letzteren besteht,
• und ein Vorgehen zur Lokalisierung der Längsstellung der Räder (2-5) zu erzeugen, das daraus besteht, bei laufendem Motor eine Analyse der Signale vorzunehmen, die für die Schwankungen der Amplitude der Schwingungen in Abhängigkeit von der Frequenz repräsentativ sind, die mindestens zum gleichen Zeitpunkt t von den unterschiedlichen Messmitteln (15) abgegeben werden, um aus dem Frequenzversatz wischen den Signalen eine Information über die Längsstellung jeden Rades (2-5) abzuleiten.

2. Verfahren zur Lokalisierung gemäß Anspruch 1, **dadurch gekennzeichnet, dass** Messmittel verwendet werden, die aus Schwingungssensoren (15) bestehen, die in der Lage sind, Signale abzugeben, d ie für die "festkörperübertragenen" Schwingungen, welche die Räder (2-5) beanspruchen, repräsentativ sind.
